# EUROPEAN PATENT APPLICATION

(11) **EP 3 333 773 A1**
(43) Date of publication of application: **13.06.2018**
(21) Application number: 16835037.9
(22) Date of filing: 03.08.2016
(51) Int. Cl.: G06K 13/063, B65H 5/06, G06K 13/05

(54) **MAGNETIC RECORDING MEDIUM PROCESSING DEVICE**

(30) Priority: 07.08.2015 US 201562202458 P; 30.09.2015 JP 2015192865
(71) Applicant: Nidec Sankyo Corporation, Suwa-gun, Nagano 393-8511 (JP)
(72) Inventor: MIYAZAWA, Shinya, Suwa-gun Nagano 393-8511 (JP)
(74) Representative: 2K Patentanwälte Blasberg Kewitz & Reichel
(86) International application number: PCT/JP2016/072757
(87) International publication number: WO 2017/026340

(57) **Abstract**

Provided is a magnetic recording medium processing device that enables suppression of an inclination of a magnetic recording medium on a medium conveying passage, reduction in the cost of a counter roller disposed to oppose a magnetic head, and simplification of a structure thereof. A magnetic recording medium processing device 1 includes: a medium conveying passage 4 where a magnetic recording medium in which magnetic data are recorded is conveyed; a magnetic head 6 disposed to face the medium conveying passage 4 from a "Z2" direction side; a conveying roller 11 structured to contact with the magnetic recording medium from a "Z1" direction side to convey the magnetic recording medium; a rotation shaft 13 to which the conveying roller 11 is fixed; a drive mechanism structured to rotate the rotation shaft 13; and a counter roller 8 disposed on a "Z1" direction side of the magnetic head 6 so as to oppose the magnetic head 6. In this magnetic recording medium processing device 1, the counter roller 8 is rotatably held by the rotation shaft 13.

## Description

### TECHNICAL FIELD

At least an embodiment of the present invention relates to a magnetic recording medium processing device structured to perform predetermined processing on a magnetic recording medium in which magnetic data are recorded.

### BACKGROUND ART

Conventionally, a card reader has been known, which is structured to perform reading of magnetic data recorded in a card and recording of magnetic data to the card (see, for example, Patent Literature 1). A card reader described in Patent Literature 1 includes: a magnetic head structured to perform reading and recording of magnetic data; a conveying roller structured to contact with a card to convey the card along a card conveying passage; a rotation shaft to which the conveying roller is fixed; a drive mechanism structured to rotate the rotation shaft; a pad roller disposed to oppose the conveying roller; and a counter roller disposed to oppose the magnetic head.

In the card reader described in Patent Literature 1, the conveying roller is a rubber roller structured of a mandrel and a rubber tire fixed to an outer peripheral side of the mandrel. Since an outer peripheral face of the rubber tire is contacted with the card, the card reader is capable of ensuring a force of the conveying roller to convey the card. Further, the conveying roller is fixed at a center position in an axial direction of the rotation shaft. The magnetic head is urged toward the counter roller. The counter roller is provided for bringing the magnetic head into contact with the card with a predetermined contact force. The counter roller contacts with the card in conveying the card by the conveying roller. It should be noted that the counter roller is fixed to an end of the rotation shaft to which the conveying roller is fixed. Therefore, this card reader is not necessarily provided with an additional member for holding the counter roller. As a result, it is possible to simplify the structure of the card reader.

### CITATION LIST

### PATENT LITERATURE

Patent Literature 1: Japanese Patent Laid-Open No. 2009-237942

### SUMMARY OF INVENTION

### TECHNICAL PROBLEM

In the card reader described in Patent Literature 1, since the counter roller is fixed to the rotation shaft to which the conveying roller is fixed, the conveying roller and the counter roller rotate at the same rotational speed. Further, since the counter roller is fixed to the rotation shaft to which the conveying roller is fixed, and is structured to contact with the card in conveying the card by the conveying roller, the card also receives a force of the counter roller to convey the card. On the other hand, a difference between an amount of conveying the card by the conveying roller and an amount of conveying the card by the counter roller in conveying the card inclines the card conveyed along the card conveying passage, which may cause deterioration in accuracy of reading or recording magnetic data by the magnetic head.

In the card reader described in Patent Literature 1, it is accordingly preferable that an outer diameter of the conveying roller be equal in length to an outer diameter of the counter roller and an outer peripheral face of the conveying roller be equal in material to an outer peripheral face of the counter roller in order to eliminate the difference in amount of conveying the card between the conveying roller and the counter roller that rotate at the same rotational speed. In the card reader described in Patent Literature 1, however, the conveying roller is a rubber roller which includes a mandrel and a rubber tire, which results in increase in the cost of the conveying roller. For this reason, when the counter roller is a rubber roller like the conveying roller, the cost of the counter roller also increases.

Therefore, in view of the problem described above, at least an embodiment of the present invention provides a magnetic recording medium processing device that enables suppression of an inclination of a magnetic recording medium on a medium conveying passage, reduction in the cost of a counter roller disposed to oppose a magnetic head, and simplification of a structure thereof.

### SOLUTIONS TO PROBLEM

To achieve the above, at least an embodiment of the present invention provides a magnetic recording medium processing device includes: a medium conveying passage where a magnetic recording medium in which magnetic data are recorded is conveyed; wherein one side in a thickness direction of the magnetic recording medium conveyed along the medium conveying passage is referred to as a first direction, and an opposite direction of the first direction is referred to as a second direction, a magnetic head disposed to face the medium conveying passage from a side of the first direction and structured to perform at least one of reading of magnetic data recorded in the magnetic recording medium and recording of magnetic data to the magnetic recording medium; a conveying roller structured to contact with the magnetic recording medium from a side of the second direction to convey the magnetic recording medium; a rotation shaft to which the conveying roller is fixed; a drive mechanism structured to rotate the rotation shaft; and a counter roller disposed on the side of the second direction of the magnetic head so as to oppose the magnetic head, wherein the counter roller is rotatably held by the rotation shaft.

In at least an embodiment of the present invention, for example, the conveying roller is a rubber roller and comprising: a rubber tire that is formed in a cylindrical shape, is made of rubber, and structures an outer peripheral-side portion of the conveying roller; and a core member that is fixed to the rotation shaft and is structured to hold the rubber tire on an inner peripheral side of the rubber tire. Further, the counter roller is a resin roller that is entirely made of resin.

In the magnetic recording medium processing device according to at least an embodiment of the present invention, the counter roller disposed to oppose the magnetic head is rotatably held by the rotation shaft to which the conveying roller is fixed. In at least an embodiment of the present invention, therefore, the counter roller exerts no force to convey the magnetic recording medium in conveying the magnetic recording medium by the conveying roller, and rotates in accordance with a conveyance speed of the magnetic recording medium. In at least an embodiment of the present invention, accordingly, there is no difference between an amount of conveying the magnetic recording medium by the conveying roller and an amount of conveying the magnetic recording medium by the counter roller, in conveying the magnetic recording medium by the conveying roller.

In at least an embodiment of the present invention, therefore, it is possible to suppress an inclination of the magnetic recording medium on the medium conveying passage without making an outer diameter of the conveying roller equal in length to an outer diameter of the counter roller and without making an outer peripheral face of the conveying roller equal in material to an outer peripheral face of the counter roller. In at least an embodiment of the present invention, accordingly, it is possible to suppress the inclination of the magnetic recording medium on the medium conveying passage even when the counter roller is a resin roller in a case where the conveying roller is a rubber roller, for example. As a result, it is possible to reduce the cost of the counter roller while suppressing the inclination of the magnetic recording medium on the medium conveying passage. Also in at least an embodiment of the present invention, since the counter roller is held by the rotation shaft to which the conveying roller is fixed, it is unnecessary to additionally provide a member for holding the counter roller. In at least an embodiment of the present invention, it is accordingly possible to simplify a structure of the magnetic recording medium processing device.

In at least an embodiment of the present invention, preferably, in conveying the magnetic recording medium by the conveying roller, the rubber tire has a contact portion corresponding to a portion contacted with the magnetic recording medium, the contact portion being elastically deformed inward in a radial direction of the conveying roller. Also preferably, the contact portion elastically deformed inward in the radial direction of the conveying roller is substantially equal in radius to the counter roller. With this structure, it is possible to make a rotational speed of the conveying roller in conveying the magnetic recording medium almost equal to a rotational speed of the counter roller. In other words, it is possible to make a rotational speed of the rotation shaft in conveying the magnetic recording medium almost equal to the rotational speed of the counter roller. Accordingly, it is possible to reduce wear in an outer peripheral face of the rotation shaft and wear in an inner peripheral face of the counter roller even when the counter roller is rotatably held by the rotation shaft.

### ADVANTAGEOUS EFFECT OF INVENTION

As described above, according to at least an embodiment of the present invention, it is possible to suppress an inclination of a magnetic recording medium on a medium conveying passage, to reduce the cost of a counter roller that is disposed to oppose a magnetic head, and to simplify a structure of a magnetic recording medium processing device.

### BRIEF DESCRIPTION OF DRAWINGS

FIG. 1 is an explanatory side view showing a schematic structure of a magnetic recording medium processing device in accordance with an embodiment of the present invention.
FIG. 2 is an explanatory front view showing a structure of section E in FIG. 1.
FIG. 3 is a perspective view of a structure of only section F in FIG. 1.
FIG. 4(A) is an explanatory enlarged view of section G in FIG. 2 and shows a state of a conveying roller that does not convey a card, and FIG. 4(B) is an explanatory enlarged view of section G in FIG. 2 and shows a state of the conveying roller that conveys the card.

### DESCRIPTION OF EMBODIMENTS

Embodiments of the present invention will be described below with reference to the accompanying drawings.

### (Structure of Magnetic Recording Medium Processing Device)

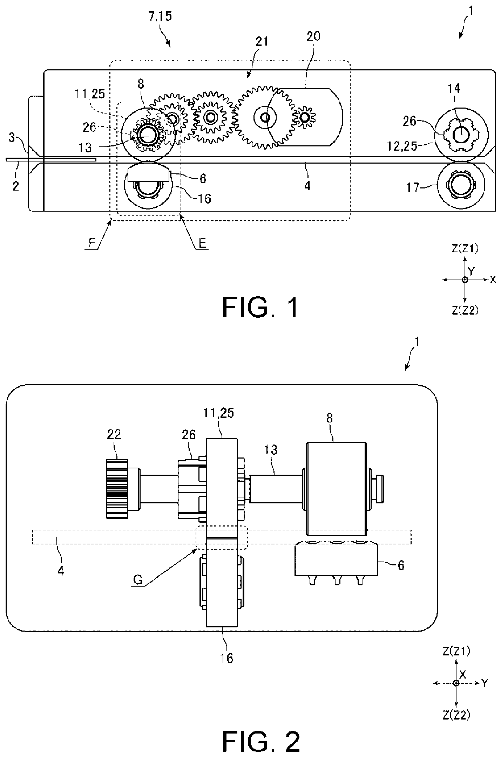

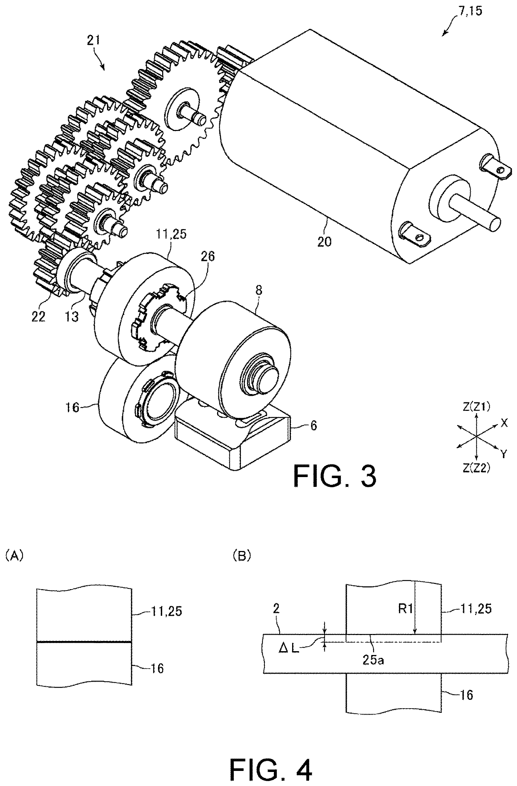

FIG. 1 is an explanatory side view showing a schematic structure of a magnetic recording medium processing device 1 in accordance with an embodiment of the present invention. FIG. 2 is an explanatory front view showing a structure of section E in FIG. 1. FIG. 3 is a perspective view of a structure of only section F in FIG. 1. FIG. 4(A) is an explanatory enlarged view of section G in FIG. 2 and shows a state of a conveying roller 11 that does not convey a card 2, and FIG. 4(B) is an explanatory enlarged view of section G in FIG. 2 and shows a state of the conveying roller 11 that conveys the card 2.

The magnetic recording medium processing device 1 in this embodiment is a card reader structured to perform reading of magnetic data recorded in the card 2 that is a magnetic recording medium and recording of magnetic data to the card 2. In the following descriptions, accordingly, the magnetic recording medium processing device 1 in this embodiment is referred to as a "card reader 1". The card reader 1 is mounted for use on a predetermined host apparatus such as an automated teller machine (ATM). Further, the card reader 1 is formed with a card insertion port 3 into which the card 2 is inserted, and a card conveying passage 4 corresponding to a medium conveying passage where the card 2 inserted into the card insertion port 3 is conveyed.

The card 2 is a card made of vinyl chloride whose thickness is about 0.7-0.8 mm, and is formed in a substantially rectangular shape. A rear face of the card 2 is formed with a magnetic stripe in which magnetic data are recorded. An IC chip may be incorporated in the card 2. The card 2 may also be a PET (polyethylene terephthalate) card whose thickness is about 0.18-0.36 mm and may be a paper card having a predetermined thickness.

In the card conveying passage 4, the card 2 is conveyed in an "X" direction in FIG. 1 and the like. In other words, the "X" direction is a conveying direction of the card 2. Further, a "Z" direction in FIG. 1 and the like perpendicular to the "X" direction is a thickness direction of the card 2 conveyed along the card conveying passage 4, and a "Y" direction in FIG. 1 and the like perpendicular to the "X" direction and the "Z" direction is a width direction of the card 2 conveyed along the card conveying passage 4. In the following descriptions, the "X" direction is referred to as a "front and rear direction", the "Y" direction is referred to as a "right and left direction", and the "Z" direction is referred to as an "upper and lower direction". Further, a "Z1" direction side is referred to as an "upper" side, and a "Z2" direction side is referred to as a "lower" side. The lower direction ("Z2" direction) in this embodiment is a first direction, and the upper direction ("Z1" direction) in this embodiment is a second direction.

The card reader 1 includes: a magnetic head 6 structured to perform at least one of reading of magnetic data recorded in the card 2 and recording of magnetic data to the card 2; a card conveying mechanism 7 structured to convey the card 2 along the card conveying passage 4; and a counter roller 8 disposed to oppose the magnetic head 6. The magnetic head 6 is disposed to face the card conveying passage 4 from the lower side. This magnetic head 6 is urged to the upper side by an urging mechanism (not shown). Further, the magnetic head 6 is located at a position where the magnetic stripe of the card 2 is passed in the right and left direction.

The card conveying mechanism 7 includes: two conveying rollers 11 and 12 each structured to contact with the card 2 to convey the card 2; a rotation shaft 13 to which the conveying roller 11 is fixed; a rotation shaft 14 to which the conveying roller 12 is fixed; a drive mechanism 15 structured to rotate the rotation shafts 13 and 14; a pad roller 16 disposed to oppose the conveying roller 11; and a pad roller 17 disposed to oppose the conveying roller 12. The conveying roller 11, the rotation shaft 13, and the pad roller 16 are disposed on a front end side of the card reader 1. The conveying roller 12, the rotation shaft 14, and the pad roller 17 are disposed on a rear end side of the card reader 1.

The drive mechanism 15 includes a motor 20, and a gear train 21 structured to transmit power of the motor 20 to the rotation shafts 13 and 14. The gear train 21 is structured of a plurality of gears. It should be noted that FIGS. 1 and 3 do not show, of the plurality of gears structuring the gear train 21, gears for coupling the motor 20 to the rotation shaft 14.

The rotation shafts 13 and 14 are disposed so that axial directions of the rotation shafts 13 and 14 are coincided with the right and left direction. Further, the rotation shafts 13 and 14 are disposed on the upper side relative to the card conveying passage 4. The rotation shafts 13 and 14 are rotatably supported by a frame of the card reader 1. A gear 22 that structures the gear train 21 is fixed to one end side of the rotation shaft 13. Further, a gear (not shown) that structures the gear train 21 is fixed to one end side of the rotation shaft 14.

The conveying roller 11 and the conveying roller 12 are formed to be equal in shape to each other. Further, each of the conveying rollers 11 and 12 is a rubber roller which includes a rubber tire 25 that is made of rubber and structures an outer peripheral-side portion of each of the conveying rollers 11 and 12, and a mandrel 26 that serves as a core member and structures an inner peripheral-side portion of each of the conveying rollers 11 and 12. Each of the rubber tires 25 is formed in a cylindrical shape. Each of the mandrels 26 is made of metal such as an aluminum alloy. Further, each of the mandrels 26 is formed in a substantially cylindrical shape. Each mandrel 26 holds the corresponding rubber tire 25 on an inner peripheral side of the rubber tire 25. In other words, each rubber tire 25 is mounted on an outer peripheral side of the corresponding mandrel 26.

The mandrels 26 are respectively fixed to the rotation shafts 13 and 14. In this embodiment, the mandrels 26 are respectively fixed at substantially center positions in the axial directions (i.e., the right and left direction) of the rotation shafts 13 and 14. In other words, the conveying rollers 11 and 12 are respectively fixed at the substantially center positions in the axial directions of the rotation shafts 13 and 14. Specifically, the conveying rollers 11 and 12 are fixed to the rotation shafts 13 and 14 with the rotation shafts 13 and 14 inserted into inner peripheral sides of the mandrels 26. The conveying rollers 11 and 12 are disposed to contact with, from the upper side, the card 2 to be conveyed along the card conveying passage 4. It should be noted that the conveying rollers 11 and 12 may be fixed at positions displaced from the substantially center positions in the axial directions of the rotation shafts 13 and 14.

The pad rollers 16 and 17 are made of resin such as polyacetal. Each of the pad rollers 16 and 17 is rotatably held by a support shaft (not shown). The pad roller 16 is disposed on a lower side of the conveying roller 11 so as to oppose the conveying roller 11. The pad roller 17 is disposed on a lower side of the conveying roller 12 so as to oppose the conveying roller 12. Further, the pad roller 16 is urged toward the conveying roller 11, and the pad roller 17 is urged toward the conveying roller 12. In other words, the pad rollers 16 and 17 are urged toward the upper side. At the time when the card 2 is not conveyed along the card conveying passage 4, as shown in FIG. 4(A), an upper end of the pad roller 16 is contacted with a lower end of the conveying roller 11. Likewise, at the time when the card 2 is not conveyed along the card conveying passage 4, an upper end of the pad roller 17 is contacted with a lower end of the conveying roller 12.

The card 2 is conveyed along the card conveying passage 4 in at least one of a state that the card 2 is sandwiched between the conveying roller 11 and the pad roller 16 and a state that the card 2 is sandwiched between the conveying roller 12 and the pad roller 17. In conveying the card 2 by the conveying roller 11, the pad roller 16 is moved to the lower side in accordance with the thickness of the card 2. In conveying the card 2 by the conveying roller 12, the pad roller 17 is moved to the lower side in accordance with the thickness of the card 2.

Also in conveying the card 2 by the conveying roller 11, the rubber tire 25 of the conveying roller 11 has a contact portion 25a corresponding to a portion contacted with an upper face of the card 2, the contact portion 25a being elastically deformed inward in a radial direction of the conveying roller 11 by an amount ΔL as shown in FIG. 4(B). Likewise, in conveying the card 2 by the conveying roller 12, the rubber tire 25 of the conveying roller 12 has a contact portion 25a that is elastically deformed inward in a radial direction of the conveying roller 12 by the amount ΔL. This structure enhances the contact force of each of the conveying rollers 11 and 12 with the upper face of the card 2 to ensure the forces of the conveying rollers 11 and 12 to convey the card 2.

The counter roller 8 is a resin roller that is entirely made of resin such as polyacetal. The counter roller 8 in this embodiment is made of resin that is comparatively excellent in lubricity. This counter roller 8 is formed in a cylindrical shape. Further, the counter roller 8 is rotatably held by the rotation shaft 13. Specifically, the other end side of the rotation shaft 13, opposite from the one end side of the rotation shaft 13 to which the gear 22 is fixed, is inserted into an inner peripheral side of the counter roller 8, so that the counter roller 8 is rotatably supported on the other end side of the rotation shaft 13. As described above, since the counter roller 8 is made of resin that is comparatively excellent in lubricity, the counter roller 8 is capable of smoothly rotating relative to the rotation shaft 13.

The counter roller 8 is disposed on an upper side of the magnetic head 6 so as to oppose the magnetic head 6. Further, the counter roller 8 is provided to contact the magnetic head 6 with the card 2 with a predetermined contact force. At the time when the card 2 is conveyed along the card conveying passage 4, the counter roller 8 is contacted with the upper face of the card 2. It should be noted that a snap ring (not shown) such as an E-type snap ring is attached to the rotation shaft 13 in order to prevent the counter roller 8 from being displaced relative to the rotation shaft 13 in the right and left direction.

An outer diameter of the counter roller 8 is smaller than outer diameters of the conveying rollers 11 and 12. Specifically, the outer diameter of the counter roller 8 is slightly smaller than the outer diameters of the conveying rollers 11 and 12. In this embodiment, further, a radius of the counter roller 8 is substantially equal to radii R1 of the contact portions 25a of the rubber tires 25, the contact portions 25a being elastically deformed inward in the radial direction of the conveying rollers 11 and 12 in conveying the card 2 (more specifically, distances from axial centers of the rotation shafts 13 and 14 to the contact portions 25a in the radial directions of the conveying rollers 11 and 12).

### (Principal Effects in this Embodiment)

As described above, in this embodiment, the counter roller 8 that is disposed to oppose the magnetic head 6 is rotatably held by the rotation shaft 13 to which the conveying roller 11 is fixed. In this embodiment, therefore, the counter roller 8 exerts no force to convey the card 2 in conveying the card 2 by the conveying roller 11, and rotates in accordance with a conveyance speed of the card 2. In this embodiment, accordingly, there is no difference between an amount of conveying the card 2 by the conveying roller 11 and an amount of conveying the card 2 by the counter roller 8, in conveying the card 2 by the conveying roller 11.

In this embodiment, therefore, it is possible to suppress an inclination of the card 2 on the card conveying passage 4 (specifically, an inclination of the card 2 relative to the front and rear direction as seen from the upper and lower direction) without making the outer diameter of the conveying roller 11 equal in length to the outer diameter of the counter roller 8 and without making the outer peripheral face of the conveying roller 11 equal in material to the outer peripheral face of the counter roller 8. In this embodiment, accordingly, it is possible to suppress the inclination of the card 2 on the card conveying passage 4 even when the counter roller 8 is a resin roller. As a result, it is possible to reduce the cost of the counter roller 8 while suppressing the inclination of the card 2 on the card conveying passage 4. Also in this embodiment, since the counter roller 8 is held by the rotation shaft 13 to which the conveying roller 11 is fixed, it is unnecessary to additionally provide a member for holding the counter roller 8. In this embodiment, accordingly, it is possible to simplify the structure of the card reader 1.

In this embodiment, in conveying the card 2 by the conveying roller 11, the contact portion 25a of the rubber tire 25 is elastically deformed inward in the radial direction of the conveying roller 11, and the radius R1 of the contact portion 25a of the elastically deformed rubber tire 25 becomes substantially equal to the radius of the counter roller 8. In this embodiment, therefore, it is possible to make the rotational speed of the conveying roller 11 in conveying the card 2 almost equal to the rotational speed of the counter roller 8. In this embodiment, in other words, it is possible to make the rotational speed of the rotation shaft 13 in conveying the card 2 almost equal to the rotational speed of the counter roller 8. In this embodiment, accordingly, it is possible to reduce wear in an outer peripheral face of the rotation shaft 13 and wear in an inner peripheral face of the counter roller 8 even when the counter roller 8 is rotatably held by the rotation shaft 13.

Also in this embodiment, since the radius R1 of the contact portion 25a of the elastically deformed rubber tire 25 becomes substantially equal to the radius of the counter roller 8, it is possible to suppress the inclination of the card 2 on the card conveying passage 4 (specifically, the inclination of the card 2 relative to the right and left direction as seen from the front and rear direction). In this embodiment, accordingly, it is possible to suppress an inclination of the card 2 relative to a magnetic gap of the magnetic head 6 as seen from the front and rear direction. As a result, it is possible to enhance the accuracy of the magnetic head 6 to read magnetic data.

### (Other Embodiments)

Described above is an example of a preferred embodiment according to the present invention. However, the present invention is not limited to the above embodiment and various variations and modifications may be made without changing the concept of the present invention.

In the embodiment described above, each of the pad rollers 16 and 17 is made of resin. Alternatively, each of the pad rollers 16 and 17 may be a rubber roller that is structured like each of the conveying rollers 11 and 12. Also in the embodiment described above, the pad rollers 16 and 17 are respectively urged toward the conveying rollers 11 and 12. However, the pad rollers 16 and 17 are not necessarily urged toward the conveying rollers 11 and 12 so long as to secure the contact force of the conveying rollers 11 and 12 as well as the pad rollers 16 and 17 with the card 2 and to appropriately convey the card 2 in the case where the card 2 is sandwiched between the conveying roller 11 and the pad roller 16 and between the conveying roller 12 and the pad roller 17. In other words, the rotation shafts to which the pad rollers 16 and 17 are respectively fixed or fixed shafts respectively structured to support the pad rollers 16 and 17 in a rotatable manner are not necessarily movable in the upper and lower direction.

In the embodiment described above, the radius R1 of the contact portion 25a of the rubber tire 25 is substantially equal to the radius of the counter roller 8. However, the radius R1 of the contact portion 25a is not necessarily equal to the radius of the counter roller 8. Also in the embodiment described above, each of the core members structuring the inner peripheral-side portions of the conveying rollers 11 and 12 is the mandrel 26 made of metal. Alternatively, each of the core members may be made of resin. Also in the embodiment described above, the magnetic recording medium processing device 1 is a card reader structured to perform predetermined processing on the card 2. Alternatively, a magnetic recording medium processing device to which the present invention is applied may be a device structured to perform predetermined processing on any magnetic recording medium in addition to the card 2.

### REFERENCE SIGNS LIST

1: card reader (magnetic recording medium processing device)
2: card (magnetic recording medium)
4: card conveying passage (medium conveying passage)
6: magnetic head
8: counter roller
11: conveying roller
13: rotation shaft
15: drive mechanism
25: rubber tire
25a: contact portion
26: mandrel (core member)
R1: radius of contact portion
Z: thickness direction of magnetic recording medium
Z1: second direction
Z2: first direction

## Claims

1. A magnetic recording medium processing device, comprising:
a medium conveying passage, where a magnetic recording medium in which magnetic data are recorded is conveyed;
wherein one side in a thickness direction of the magnetic recording medium conveyed along the medium conveying passage is referred to as a first direction, and an opposite direction of the first direction is referred to as a second direction,
a magnetic head, disposed to face the medium conveying passage from a side of the first direction and structured to perform at least one of reading of magnetic data recorded in the magnetic recording medium and recording of magnetic data to the magnetic recording medium;
a conveying roller, structured to contact with the magnetic recording medium from a side of the second direction to convey the magnetic recording medium;
a rotation shaft to which the conveying roller is fixed;
a drive mechanism, structured to rotate the rotation shaft; and
a counter roller, disposed on the side of the second direction of the magnetic head so as to oppose the magnetic head,
wherein the counter roller being rotatably held by the rotation shaft.

2. The magnetic recording medium processing device according to claim 1, wherein the conveying roller is a rubber roller and comprising:
a rubber tire that is formed in a cylindrical shape, is made of rubber, and structures an outer peripheral-side portion of the conveying roller; and
a core member that is fixed to the rotation shaft and is structured to hold the rubber tire on an inner peripheral side of the rubber tire,
wherein the counter roller is a resin roller that is entirely made of resin.

3. The magnetic recording medium processing device according to claim 2, wherein
in conveying the magnetic recording medium by the conveying roller, the rubber tire has a contact portion corresponding to a portion contacted with the magnetic recording medium, the contact portion being elastically deformed inward in a radial direction of the conveying roller, and
the contact portion elastically deformed inward in the radial direction of the conveying roller is substantially equal in radius to the counter roller.
